# EUROPÄISCHE PATENTSCHRIFT

(11) **EP 2 880 330 B1**
(45) Veröffentlichungstag und Bekanntmachung des Hinweises auf die Patenterteilung: **09.10.2019**
(21) Anmeldenummer: 13753563.9
(22) Anmeldetag: 01.08.2013
(51) Int. Cl.: F16D 25/08

(54) **KOLBEN-ZYLINDEREINHEIT EINES HYDRAULISCHEN SYSTEMS**
PISTON/CYLINDER UNIT OF A HYDRAULIC SYSTEM
UNITÉ À PISTON/CYLINDRE D'UN SYSTÈME HYDRAULIQUE

(30) Priorität: 02.08.2012 DE 102012213654
(43) Veröffentlichungstag der Anmeldung: 10.06.2015
(73) Patentinhaber: Schaeffler Technologies AG & Co. KG, 91074 Herzogenaurach (DE)
(72) Erfinder: BOSNJAK, Daniel, F-67470 Seltz (FR)
(86) Internationale Anmeldenummer: PCT/DE2013/200087
(87) Internationale Veröffentlichungsnummer: WO 2014/019583

(56) Entgegenhaltungen:
- DE-A1- 19 716 217
- DE-A1-102011 011 225
- US-A1- 2001 004 038

## Beschreibung

Die Erfindung betrifft eine Kolben-Zylindereinheit eines hydraulischen Systems, insbesondere eines Nehmerzylinders eines CSC.

Derartige Kolben-Zylindereinheiten bzw. Nehmerzylinder werden beispielsweise bei direkt betätigten Doppelkupplungen mit deckelfestem, konzentrisch angeordnetem hydraulischem Einrücksystem verwendet. Beispielsweise in der Druckschrift EP 1 970 589 B1 wird ein Nehmerzylinder für ein hydraulisches Ausrücksystem einer Reibungskupplung von Fahrzeugen beschrieben, wobei der Nehmerzylinder ein Nehmerzylindergehäuse aufweist, das konzentrisch zu einer Getriebeeingangswelle angeordnet ist, wobei eine Führungshülse in einer Längsbohrung des Druckgehäuses radial beabstandet zur Bildung eines kreisringförmigen Druckraums angeordnet ist und im Druckraum ein Ringkolben axial verschiebbar geführt ist, der druckraumseitig mit einer Dichtung versehen ist, deren Dichtlippen radial gespreizt angeordnet sind. Der Ringkolben umfasst einen Kolbenkörper sowie einen Dichtungsträger, der die Dichtung trägt, welche zusammen mit dem Nehmerzylindergehäuse sowie der Führungshülse einen Druckraum einschließt. Nachteilig ist das zwischen Dichtringträger und Kolben auftretende Spiel, welches im Betrieb zu einer Verschiebung der Kennlinie führen kann und das Verschleißverhalten und somit die Lebensdauer negativ beeinflusst.

Weitere Kolben-Zylindereinheiten sind in der US 2001/0004038 A1, welche einen Ringkolben mit einer Dichtung zeigt, die an einem zylindrischen Halteelement in formschlüssiger Verbindung steht, sowie der DE 197 16 217 A1 offenbart.

Aus der DE 10 2011 011 225 A1 ist eine Kolben-Zylindereinheit mit Schnappverbindung zwischen Ringkolben und Ringträger bekannt,
wobei die Schnapphaken in die Ausnehmungen greifen und eine radial nach innen weisende Nase aufweisen, die mit einer Anlagefläche an der Stirnseite des Bundes des Ringkolbens unter Aufbringung einer axialen Vorspannung anliegt.

Aufgabe der Erfindung ist es, eine Kolben-Zylindereinheit eines hydraulischen Systems, insbesondere eines Nehmerzylinders eines CSC zu entwickeln, welches eine spielfreie Lagerung des Dichtungsträgers gewährleistet.

Diese Aufgabe wird durch die kennzeichnenden Merkmale des ersten Patentanspruchs gelöst. Vorteilhafte Ausgestaltungen ergeben sich aus den Unteransprüchen.

Die Kolben-Zylindereinheit eines hydraulischen Systems ist insbesondere in Form eines Nehmerzylinders für ein hydraulisches Ausrücksystem (CSC) einer Reibungskupplung eines Fahrzeuges ausgebildet, wobei der Nehmerzylinder ein Gehäuse aufweist, das konzentrisch zu einer Getriebeeingangswelle angeordnet ist und wobei das Gehäuse wenigstens einen kreisringförmigen Druckraum aufweist, in dem ein Ringkolben axial verschiebbar geführt ist, der in Richtung zum Druckraum mit einer Dichtung versehen ist, die an einem am Ringkolben aufgenommenen Dichtringträger befestigt ist, wobei am Dichtringträger Rastelemente angeordnet sind, die mit korrespondierenden Rastmitteln des Ringkolbens verrasten. Das Verrasten der Rastelemente des Dichtringträgers mit den Rastmitteln des Ringkolbens erfolgt dabei so, dass eine axiale Vorspannung zwischen diesen vorhanden ist. Durch diese axiale Vorspannung wird vermieden, dass zwischen Kolben und Dichtringträger in axialer Richtung ein Spiel vorhanden ist.

Erfindungsgemäß sind die Rastelemente des Dichtringträgers in Form von am Umfang verteilten Schnapphaken ausgebildet und die Rastmittel des Ringkolbens sind als zu den Schnapphaken korrespondierende Ausnehmungen im Kolben ausgebildet, in welche die Schnapphaken im montierten Zustand eingreifen.

Dazu ist der Ringkolben in Richtung zum Dichtringträger mit einem sich an die Ausnehmung anschließenden Bund versehen, der in Richtung zum Dichtringträger eine erste Stirnseite, davon abgewandt eine zweite Stirnseite aufweist. Die Schnapphaken weisen an ihrem in die Ausnehmung eingreifenden Bereich eine radial nach innen weisende Nase auf, die mit einer Anlagefläche an der zweiten Stirnseite des Bundes unter Aufbringung einer axialen Vorspannung anliegt.

Der Kolben weist in Richtung zum Dichtringträger eine dritte Stirnseite auf, an welcher der Dichtringträger mit einer vierten Stirnseite anliegt. Dabei sind der Abstand a zwischen der zweiten und der dritten Stirnseite des Dichtringträgers und der Abstand b zwischen der vierten Stirnseite des Dichtringträgers und der Anlagefläche der Nase der Schnapphaken so ausgelegt, dass nach der Herstellung der Verbindung zwischen Kolben und Dichtringträger die erforderliche axiale Vorspannkraft vorhanden ist, durch welche der Dichtringträger mit seiner vierten Stirnseite gegen die dritte Stirnseite des Kolbens axial spielfrei gedrückt wird.

Zur Erzeugung der axialen Vorspannkraft sind entweder die Schnapphaken und/oder der Bund in axialer Richtung federnd ausgebildet.

Die Schnapphaken sind dazu ausgehend von der vierten Stirnseite radial nach außen abgewinkelt sein und sich anschließend in axialer Richtung erstrecken, so dass durch die radiale Abwinklung ein axialer Federweg zur Verfügung gestellt wird.

Gleichzeitig oder alternativ weist der Bund zumindest eine in Umfangsrichtung verlaufende Nut auf, durch welche im Bereich des Bundes ein axialer Federweg zur Verfügung gestellt wird.

Durch die Lösung ist mit einfachen konstruktiven Mitteln eine spielfreie Befestigung des Dichtringträgers am Ringkolben gewährleistet.

Die Erfindung wird nachfolgend anhand von Ausführungsbeispielen und zugehörigen Zeichnungen näher erläutert. Es zeigen:
- Figur 1: ein Detail eines Nehmerzylinders mit Längsschnitt durch Ringkolben, Dichtringträger und Dichtung in einer ersten Variante der Erfindung,
- Figur 2: die dreidimensionale Darstellung des Kolbens und des Dichtringträgers gemäß Figur 1 im nicht montierten Zustand,
- Figur 3: einen Ringkolben mit daran befestigtem Dichtringträger in einer zweiten Variante der Erfindung im Teillängsschnitt,
- Figur 4: die dreidimensionale Darstellung des Kolbens und des Dichtringträgers gemäß Figur 3 im nicht montierten Zustand.

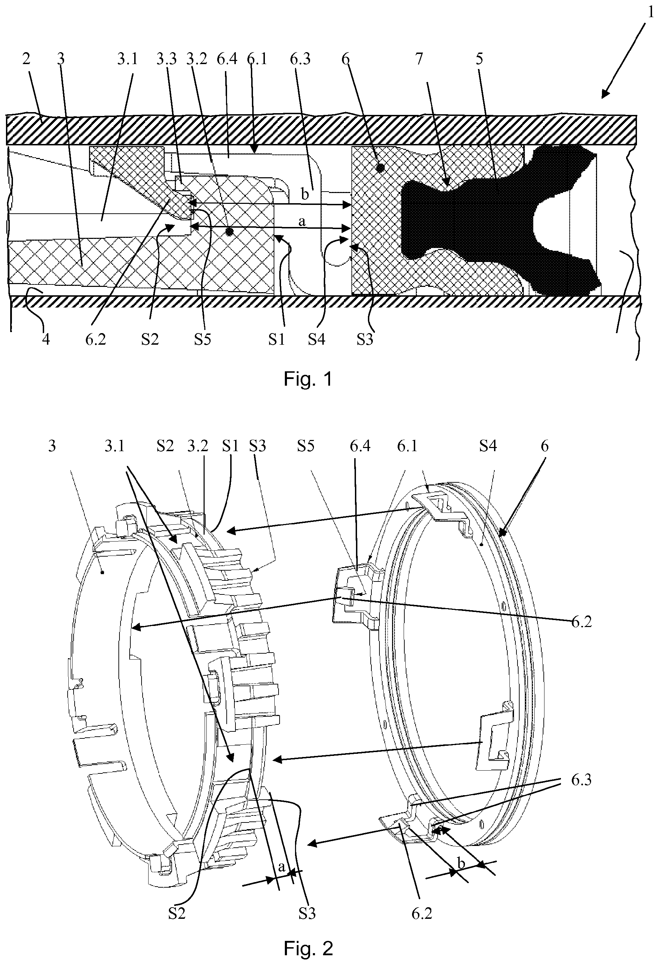

Die Figur 1 zeigt eine erste Variante eines Nehmerzylinders 1 einer Doppelkupplung mit einem Gehäuse 2 im Teil-Längsschnitt durch einen Ringkolben 3, der in einem Ringraum 4 axial verschiebbar angeordnet ist und in Richtung zu einem Druckraum D eine Dichtung 5 in Form einer Ringdichtung aufweist, die über einen ringförmigen Dichtringträger 6 am Ringkolben 3 befestigt ist und in Figur 2 werden der Ringkolben 3 und der Dichtringträger 5 im nicht montierten Zustand in dreidimensionaler Darstellung gezeigt.

Der Ringkolben 3 weist über dem Umfang verteilt mehrere Ausnehmungen 3.1 auf, an die sich in Richtung zum Dichtringträger 5 ein Bund 3.2 anschließt. Der Bund 3.2 besitzt eine in Richtung zum Dichtringträger 6 weisende erste Stirnseite S1 und eine davon abgewandte zweite Stirnseite S2, an die sich radial außen von der Stirnseite S1 wegweisend ein Absatz 3.3 erstreckt. In Richtung zum Dichtringträger 6 besitzt der Ringkolben 3 eine dritte Stirnseite S3. Zwischen der zweiten Stirnseite S2 und der dritten Stirnseite S3 besteht ein Abstand a (s. Figur 2). Der Dichtringträger 6 weist Schnapphaken 6.1 auf, die an ihrem freien Ende eine radial nach innen weisende Nase 6.2 mit einer in Richtung zu deren vierter Stirnfläche S4 weisenden Anlagefläche S5 besitzen. Zwischen der Anlagefläche S5 und der vierten Stirnfläche S4 ist ein Abstand b vorhanden. Der Schnapphaken 6.1 weist eine zweifache Krümmung auf, so dass ein nach außen weisender radialer Bereich 6.3 gebildet wird, der axial federn kann und an den sich ein im Wesentlichen axialer Bereich 6.4 mit der Nase 6.2 anschließt. Der Dichtringträger besitzt gemäß Figur 1 an der von den Schnapphaken 6.1 abgewandten Seite eine Nut 7, in welcher die Dichtung 5 mit einem korrespondierenden Bereich befestigt ist. Die Dichtung 5 weist zwei radial nach innen und außen voneinander wegweisende, nicht bezeichnete Dichtlippen auf, welche den ringnutförmigen Druckraum D radial nach innen und außen abdichten.

In dem gemäß Figur 1 dargestellten montierten Zustand rasten die Schnapphaken 6.1 mit den Nasen 6.2 in die Ausnehmungen 3.1 des Kolbens 3 ein, wobei jeweils die Anlagefläche S5 einer Nase 6.2 an einer zweiten Stirnfläche S2 des Bundes 3.3 des Kolbens 3 unter axialer Vorspannung anliegt. Die vierte Stirnfläche S4 des Dichtringträgers 6 wird dadurch spielfrei gegen die dritte Stirnseite S3 des Ringkolbens 3 gedrückt.

Der Abstand a zwischen der zweiten und der dritten Stirnseite S2, S3 des Kolbens 3 und der Abstand b zwischen der vierten Stirnseite S4 des Dichtringträgers 6 und der Anlagefläche S5 der Nase 6.2 der Schnapphaken 1 sind dabei so ausgelegt, dass nach der Herstellung der Verbindung zwischen Ringkolben 3 und Dichtringträger 6 auch die erforderliche axiale Vorspannung vorhanden ist, durch welche der Dichtringträger 6 mit der vierten Stirnseite S4 gegen die dritte Stirnseite S3 des Ringkolbens 3 gedrückt wird.

Bei der in den Figuren 1 und 2 dargestellten Variante sind somit die Schnapphaken 6.1 axial federnd ausgebildet, so dass über diese die axiale Vorspannung erzeugt wird.

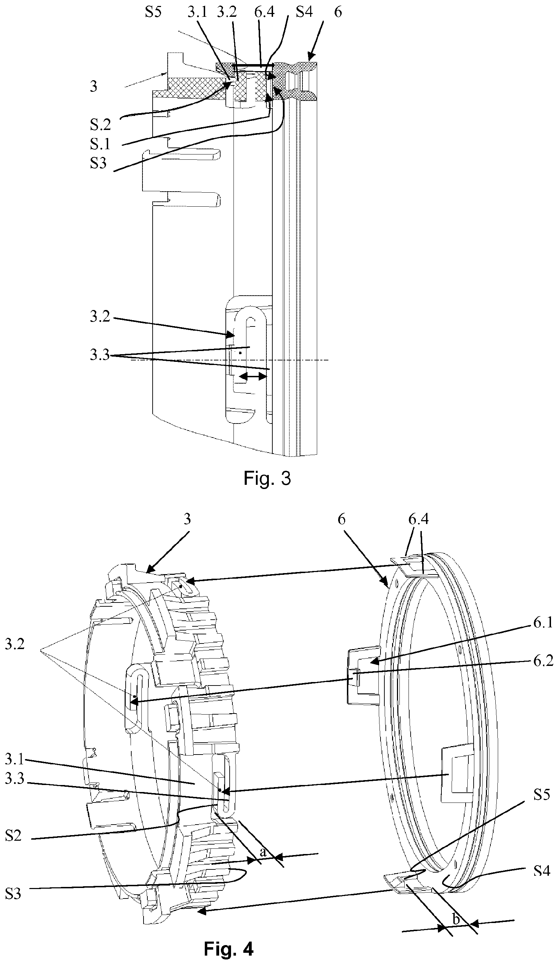

Die alternative zweite Variante gemäß Figur 3 und 4, in welcher jeweils die Ringdichtung 3 und der Dichtringträger 6 im montierten Zustand und im nicht montierten Ziustand dargestellt sind, besitzt im Wesentlichen die gleichen konstruktiven Merkmale wie Variante 1 mit den beiden Unterschieden, dass die Schnapphaken 6.1 des Dichtringträgers 6 nicht axial federnd ausgebildet sind und nur einen sich axial erstreckenden Bereich 6.4 mit der Nase 6.3 aufweisen, und dass dafür am Ringkolben 3 der Bund 3.2 axial federnd ausgebildet ist, wofür umfangsseitig eingebrachte Nuten 3.3 vorgesehen sind.

Auch hier müssen der Abstand a zwischen der zweiten Stirnseite S2 des Bundes 3.2 und der Abstand b zwischen der Anlagefläche S5 der Nase 6.2 eines jeden Schnapphakens 6.1 und der vierten Stirnfläche S4 des Dichtringträgers 6 so aufeinander abgestimmt sein, dass nach dem Einschnappen der Nase 6.2 in die entsprechende Ausnehmung 3.1 deren Anlagefläche S5 unter axialer Vorspannung an der zweiten Stirnseite S2 des Bundes 3.2 des Ringkolbens 3 anliegt.

Zur Montage wird bei beiden Varianten der Dichtringträger 6 mit seinen Schnapphaken 6.1 über den Bund 3.2 des Ringkolbens 3 geschoben, wobei sich die Schnapphaken 6.1 radial aufweiten, um über den Bund 3.2 zu gelangen und nach Überwindung des Bundes 3.2 in die Ausnehmungen 3.1 eingreifen und wieder radial nach innen federn, wodurch der Dichtringträger am Ringkolben 3 befestigt ist.

Durch die Lösung liegt der Dichtringträger immer zuverlässig am Ringkolben an, wodurch kein Spiel zwischen diesen vorhanden ist und somit auch keine Relativbewegungen entstehen, die zur unerwünschten Veränderung der Kennlinie führen könnten.

### Bezugszeichenliste

- 1: Nehmerzylinder
- 2: Gehäuse
- 3: Ringkolben
- 3.1: Ausnehmungen
- 3.2: Bund
- 3.3: in Umfangsrichtung verlaufende Nut
- 4: Ringraum
- 5: Dichtung
- 6: Dichtringträger
- 6.1: Schnapphaken
- 6.2: Nase
- 6.3: radialer Bereich
- 6.4: axialer Bereich
- 7: Nut
- a: Abstand
- b: Abstand
- D: Druckraum
- S1: erste Stirnfläche
- S2: zweite Stirnfläche
- S3: dritte Stirnfläche
- S4: vierte Stirnfläche
- S5: Anlagefläche

## Patentansprüche

1. Kolben-Zylindereinheit eines hydraulischen Systems, insbesondere eines Nehmerzylinders für ein hydraulisches Ausrücksystem (CSC) einer Reibungskupplung eines Fahrzeuges, wobei der Nehmerzylinder (1) ein Gehäuse (2) aufweist, das konzentrisch zu einer Getriebeeingangswelle angeordnet ist, wobei das Gehäuse (2) wenigstens einen kreisringförmigen Ringraum (4) aufweist, in dem ein Ringkolben (3) axial verschiebbar geführt ist, der in Richtung zu einem Druckraum (D) mit einer Dichtung (7) versehen ist, die an einem am Ringkolben (3) aufgenommenen Dichtringträger (6) befestigt ist, und am Dichtringträger (6) Rastelemente angeordnet sind, die mit korrespondierenden Rastmitteln des Ringkolbens (3) verrasten, wobei die Rastelemente des Dichtringträgers (6) in Form von am Umfang verteilten Schnapphaken (6.1) ausgebildet sind und dass die Rastmittel des Ringkolbens (3) als zu den Schnapphaken korrespondierende Ausnehmungen (3.1) im Ringkolben (3) ausgebildet sind, wobei der Ringkolben (3) sich an die Ausnehmung (3.1) anschließend in Richtung zum Dichtringträger einen Bund (3.2) mit einer in Richtung zum Dichtringträger (6) weisenden ersten Stirnseite (S1) und einer davon abgewandten zweiten Stirnseite (S2) aufweist und wobei die Schnapphaken (6.1) in die Ausnehmungen (3.1) greifen und eine radial nach innen weisende Nase (6.2) aufweisen, die mit einer Anlagefläche (S5) an der zweiten Stirnseite (S2) des Bundes (3.2) des Kolbens (3) unter Aufbringung einer axialen Vorspannung anliegt,
**dadurch gekennzeichnet, dass**
die Schnapphaken (6.1) ausgehend von der vierten Stirnseite (S4) radial nach außen abgewinkelt sind und sich anschließend in axialer Richtung erstrecken, und dass durch die radiale Abwinklung ein axialer Federweg zur Verfügung gestellt wird und/oder der Bund (3.2) zumindest eine in Umfangsrichtung verlaufende Nut (3.3) aufweist, durch welche im Bereich des Bundes (3.2) ein axialer Federweg zur Verfügung gestellt wird.

2. Kolben-Zylindereinheit nach Anspruch 1, **dadurch gekennzeichnet, dass** die Rastelemente des Dichtringträgers (6) mit den Rastmitteln des Ringkolbens (3) so verrasten, dass eine axiale Vorspannung zwischen diesen vorhanden ist.

3. Kolben-Zylindereinheit nach Anspruch 1, **dadurch gekennzeichnet, dass** der Ringkolben (3) in Richtung zum Dichtringträger (6) eine dritte Stirnseite (S3) aufweist, an welcher der Dichtringträger (6) mit einer vierten Stirnseite (S4) anliegt und dass ein Abstand (a) zwischen der zweiten und der dritten Stirnseite (S2, S3) des Ringkolbens (3) und ein Abstand (b) zwischen der vierten Stirnseite (S4) des Dichtringträgers und der Anlagefläche (S5) der Nase (6.2) der Schnapphaken (6.1) so ausgelegt sind, dass nach der Herstellung der Verbindung zwischen Ringkolben (3) und Dichtringträger (6) eine axiale Vorspannung vorhanden ist, durch welche der Dichtringträger (6) mit der vierten Stirnseite (S4) gegen die dritte Stirnseite (S3) des Ringkolbens (3) gedrückt wird.

## Claims

1. Piston/cylinder unit of a hydraulic system, in particular a slave cylinder for a hydraulic release system (CSC) of a friction clutch of a vehicle, the slave cylinder (1) having a housing (2) which is arranged concentrically with respect to a transmission input shaft, the housing (2) having at least one circularly annular ring space (4), in which an annular piston (3) is guided in an axially displaceable manner, which annular piston (3) is provided in the direction towards a pressure space (D) with a seal (7) which is fastened to a sealing ring carrier (6) which is received on the annular piston (3), and latching elements being arranged on the sealing ring carrier (6), which latching elements latch with corresponding latching means of the annular piston (3), the latching elements of the sealing ring carrier (6) being configured in the form of snap-in hooks (6.1) which are distributed on the circumference, and the latching means of the annular piston (3) being configured as recesses (3.1) in the annular piston (3) which correspond with the snap-in hooks, the annular piston (3) having, in a manner which adjoins the recess (3.1) in the direction of the sealing ring carrier, a collar (3.2) with a first end side (S1) which points in the direction of the sealing ring carrier (6) and a second end side (S2) which faces away from the said first end side (S1), and the snap-in hooks (6.1) engaging into the recesses (3.1) and having a radially inwardly pointing lug (6.2) which bears with a bearing face (S5) against the second end side (S2) of the collar (3.2) of the piston (3) with the application of an axial prestress, **characterized in that**, starting from the fourth end side (S4), the snap-in hooks (6.1) are angled away radially to the outside and subsequently extend in the axial direction, and **in that** an axial spring travel is provided by way of the radial angled-away portion and/or the collar (3.2) has at least one groove (3.3) which runs in the circumferential direction and by way of which an axial spring travel is provided in the region of the collar (3.2) .

2. Piston/cylinder unit according to Claim 1, **characterized in that** the latching elements of the sealing ring carrier (6) latch with the latching means of the annular piston (3) in such a way that there is an axial prestress between them.

3. Piston/cylinder unit according to Claim 1, **characterized in that** the annular piston (3) has a third end side (S3) in the direction of the sealing ring carrier (6), against which third end side (S3) the sealing ring carrier (6) bears with a fourth end side (S4), and **in that** a spacing (a) between the second and the third end side (S2, S3) of the annular piston (3) and a spacing (b) between the fourth end side (S4) of the sealing ring carrier and the bearing face (S5) of the lug (6.2) of the snap-in hooks (6.1) are designed in such a way that there is an axial prestress after the establishment of the connection between the annular piston (3) and the sealing ring carrier (6), by way of which axial prestress the sealing ring carrier (6) is pressed with the fourth end side (S4) against the third end side (S3) of the annular piston (3).

## Revendications

1. Unité piston-cylindre d'un système hydraulique, en particulier d'un cylindre récepteur destiné à un système de débrayage hydraulique (CSC) d'un embrayage à friction d'un véhicule, le cylindre récepteur (1) comportant un boîtier (2) qui est disposé concentriquement à un arbre d'entrée de boîte de vitesses, le boîtier (2) comportant au moins un espace annulaire (4) en forme d'anneau circulaire dans lequel un piston annulaire (3) est guidé de manière à coulisser axialement, lequel piston annulaire est pourvu, en direction d'une chambre de pression (D), d'un joint d'étanchéité (7) qui est fixé à un support d'étanchéité annulaire (6) reçu au niveau du piston annulaire (3) et des éléments d'encliquetage étant disposés au niveau du support d'étanchéité annulaire (6), lesquels éléments d'encliquetage s'encliquètent avec des moyens d'encliquetage correspondants du piston annulaire (3), les éléments d'encliquetage du support d'étanchéité annulaire (6) étant conçus sous la forme de crochet d'encliquetage (6.1) répartis sur la périphérie et les moyens d'encliquetage du piston annulaire (3) étant conçus sous la forme d'évidements (3.1), correspondant aux crochets d'encliquetage, qui sont ménagés dans le piston annulaire (3), le piston annulaire (3) comportant, au niveau de l'évidement (3.1) puis en direction du support d'étanchéité annulaire, une nervure (3.2) pourvue d'un premier côté frontal (S1) tourné en direction du support d'étanchéité annulaire (6) et d'un deuxième côté frontal (S2) opposé au premier et les crochets d'encliquetage (6.1) s'engageant dans les évidements (3.1) et comportant un ergot (6.2) qui est dirigé radialement vers l'intérieur et qui vient en appui, par le bais d'une surface d'appui (S5), sur le deuxième côté frontal (S2) de la nervure (3.2) du piston (3) en appliquant une précontrainte axiale,
**caractérisé en ce que**
les crochets d'encliquetage (6.1) sont pliés radialement vers l'extérieur depuis le quatrième côté frontal (S4) puis s'étendent dans la direction axiale, et **en ce que** le pliage radial permet un débattement axial et/ou la nervure (3.2) comporte au moins une gorge (3.3) qui s'étend dans la direction périphérique et qui permet un débattement axial au niveau de la nervure (3.2).

2. Unité piston-cylindre selon la revendication 1,
**caractérisée en ce que** les éléments d'encliquetage du support d'étanchéité annulaire (6) s'encliquètent avec les moyens d'encliquetage du piston annulaire (3) de manière à ce qu'une précontrainte axiale soit exercée entre eux.

3. Unité piston-cylindre selon la revendication 1,
**caractérisée en ce que** le piston annulaire (3) comporte en direction du support d'étanchéité annulaire (6) un troisième côté frontal (S3) sur lequel le support d'étanchéité annulaire (6) vient en appui par le biais d'un quatrième côté frontal (S4) et **en ce qu'**une distance (a) entre les deuxième et troisième côtés frontaux (S2, S3) du piston annulaire (3) et une distance (b) entre le quatrième côté frontal (S4) du support d'étanchéité annulaire et la surface d'appui (S5) de l'ergot (6.2) des crochets d'encliquetage (6.1) sont conçues de telle sorte que, après avoir établi la liaison entre le piston annulaire (3) et le support d'étanchéité annulaire (6), une précontrainte axiale soit exercée qui permet de presser le support d'étanchéité annulaire (6), par le biais du quatrième côté frontal (S4), contre le troisième côté frontal (S3) du piston annulaire (3).
